# FASCICULE DE BREVET EUROPEEN

(11) **EP 3 862 980 B1**
(45) Date de publication et mention de la délivrance du brevet: **03.04.2024**
(21) Numéro de dépôt: 21155555.2
(22) Date de dépôt: 05.02.2021
(51) Int. Cl.: G06T 17/00, E02B 3/12

(54) **PROCÉDÉ DE CONSTRUCTION D'UNE REPRÉSENTATION TRIDIMENSIONNELLE VIRTUELLE D'UNE CARAPACE DE DIGUE**
VERFAHREN ZUR HERSTELLUNG EINER VIRTUELLEN DREIDIMENSIONALEN DARSTELLUNG EINER DAMMAUSSENSCHICHT
METHOD OF GENERATION OF A VIRTUAL THREE-DIMENSIONAL REPRESENTATION OF BREAKWATER SURFACE LAYER

(30) Priorité: 07.02.2020 FR 2001240
(43) Date de publication de la demande: 11.08.2021
(73) Titulaire: Idocean, 97418 La Possession (FR)
(72) Inventeur: LAUNAY, Timothée, 72700 Rouillon (FR); MACAIGNE, Vincent, 97419 La Possession (FR)
(74) Mandataire: IP Trust

(56) Documents cités:
- M. BUENO ESPOSITO ET AL: "3D reconstruction of cubic armoured rubble mound breakwaters from incomplete lidar data", INTERNATIONAL JOURNAL OF REMOTE SENSING, vol. 36, no. 21, 2 novembre 2015 (2015-11-02), pages 5485-5503, XP055754167, GB ISSN: 0143-1161, DOI: 10.1080/01431161.2015.1093191
- I. PUENTE ET AL: "Terrestrial laser scanning for geometry extraction and change monitoring of rubble mound breakwaters", ISPRS ANNALS OF PHOTOGRAMMETRY, REMOTE SENSING AND SPATIAL INFORMATION SCIENCES, vol. II-5, 28 mai 2014 (2014-05-28), pages 289-295, XP055754175, DOI: 10.5194/isprsannals-II-5-289-2014
- Anonymous: "3D georeferenced seawall inspection - ID OCEAN", , 30 septembre 2019 (2019-09-30), pages 1-12, XP055753705, YOUTUBE.COM Extrait de l'Internet: URL:https://www.youtube.com/watch?v=UrI9rM jVqAY [extrait le 2020-11-24]
- SAFARI IMAN ET AL: "Hydraulic stability and wave overtopping of Starbloc armored mound breakwaters", OCEAN ENGINEERING, PERGAMON, AMSTERDAM, NL, vol. 151, 13 février 2018 (2018-02-13), pages 268-275, XP085348282, ISSN: 0029-8018, DOI: 10.1016/J.OCEANENG.2017.12.061
- KIM D H ET AL: "Neural network for design and reliability analysis of rubble mound breakwaters", OCEAN ENGINEERING, PERGAMON, AMSTERDAM, NL, vol. 32, no. 11-12, août 2005 (2005-08), pages 1332-1349, XP027633426, ISSN: 0029-8018 [extrait le 2005-08-01]
- JIAQI YANG ET AL: "A Performance Evaluation of Correspondence Grouping Methods for 3D Rigid Data Matching", ARXIV.ORG, CORNELL UNIVERSITY LIBRARY, 201 OLIN LIBRARY CORNELL UNIVERSITY ITHACA, NY 14853, 5 juillet 2019 (2019-07-05), XP081438578,

## Description

### Domaine de l'invention

La présente invention concerne le domaine de la surveillance et de la maintenance de carapaces de digues et de brises-lames.

De telles carapaces de digues sont formées de manière connue par des blocs artificiels présentant une géométrie tridimensionnelle connue et constante, imbriqués lors de leur dépose sur la digue pour la protéger contre les agressions de la houle marine.

On connaît notamment la technique des carapaces monocouches qui protègent les digues exposées à la houle par des blocs en béton non armé conçus pour être disposés en une seule couche. En particulier, on connaît la technique ACCROPODE (nom commercial) mettant en oeuvre des blocs présentant quatre bras surmontés de relief d'accrochage ainsi que de deux dômes pyramidaux également munis de reliefs d'accrochage.

Les blocs connus sous les noms commerciaux Accropode, Ecopode et Acropode II, selon les brevets espagnols ES488536 et ES2190405, français FR2647135 et FR2734292 et mexicain MX9703058 ou MXPA05000975, sont des polypodes à six pointes ou en forme de patte, composés de deux parties en forme d'enclume réunies en une section centrale, d'où de chaque enclume deux extrémités extrêmes se détacher, pour former une sorte de "X", d'où sortent deux points dans la direction normale du centre de leurs faces avant du bloc principal. Certains de ses bords chanfreinent à 45 °. Sa conception est basée sur les sommets de ses points extrêmes et ses polyèdres centraux, sont inscrits et coïncident dans les plans extérieurs virtuels d'un cube, où la longueur de sa base "D" et la longueur de sa hauteur "H" sont les mêmes. Ses performances atteignent des valeurs élevées du coefficient de stabilité, avec des valeurs qui atteignent 16, pour les pentes de faible pente.

D'autres types de formes sont connues, par exemples les blocs Core-Loc (nom commercial), ou COB, SHED, Seabee, Armorloc, Pressrock, Ortherblock, A-Jacks, Xbloc, Xblocplus, Xbase ou (noms commerciaux) pour les digues dans les zones énergétiques à houle modérée.

Les blocs peuvent être placés dans la mer ou juste au-dessus. Les blocs sont positionnés selon un schéma de pose prédéterminé pour assurer un accrochage fiable, une couverture homogène de la digue et un débattement maîtrisé des blocs entre eux. La stabilité hydraulique implique que les blocs s'accrochent correctement à la surface sous-jacente (remblais, sous-couche constituée d'enrochements, ...) à protéger et, d'autre part, s'accrochent entre eux, de sorte que la structure résultant de l'emboîtement des blocs entre eux reste stable dans le temps malgré les efforts (courants, vagues, vagues) auxquels elle est soumise.

La liaison entre les pièces est réalisée par le simple contact qui implique la juxtaposition des faces externes des ailes. La base de placement sera constituée d'une couche de brise-lames naturels d'un poids adéquat, dans chaque cas, aux dimensions de la pièce, dûment régularisé

Comme mentionné, l'ensemble des pièces placées forme une pente avec de nombreuses cavités, en raison de la conception unique de chaque unité.

On peut dire qu'une digue exposée à l'action des vagues est sollicitée par les actions issues des processus suivants :
a) impact du plan d'eau sur la vague incidente,
b) forces de traînée générées par les flux massiques d'eau qui longent la pente ascendante et descendante
c) forces générées par les gradients de pression entre les zones intérieures et extérieures de la carapace.

La stabilité structurelle d'une carapace de protection d'une digue ou d'une berge construite avec une couche de blocs objet de l'invention repose principalement sur deux effets :
- Atténuation des forces d'extraction dues à la perméabilité et à la porosité élevées de la couche de protection présentée par les blocs cités ;
- Résistance aux mouvements des pièces individuelles, tant sur le plan de pente que dans la perpendiculaire, en raison des contraintes imposées par les blocs adjacents.

Une autre propriété caractéristique des levées formées avec des blocs réside dans le faible indice de réflexion des ondes. L'atténuation de l'énergie des vagues réfléchie dans la digue ou la berge se produit par les processus suivants :
a) Décalage des ondes réfléchies : se produit en raison du temps investi par la masse d'eau de l'onde en cours de montée et de descente par la pente.
b) Forte percolation de la masse d'eau entre les interstices qui forment la juxtaposition des pièces et qui dérivent le courant de retour vers la couche inférieure.
C) Génération de turbulence dans le processus ascendant de l'eau en raison des bords vivants des pièces

Ces formes de comportement hydraulique génèrent également un comportement favorable de la digue contre les ondes de houle, car la dissipation progressive de l'énergie dans la phase de montée de l'onde le long de la pente collabore à une diminution de la hauteur de portance (montée).

Dans le cas de berges ou de pentes côtières non exposées à l'action directe des vagues, le bloc de l'invention conserve ses propriétés de protection des pentes contre les forces de traînée qui génèrent les courants parallèles à la berge. La perte modérée d'énergie par turbulence provoquée par la porosité du manteau collabore à une légère réduction du débit du courant.

Les avantages du type esthétique qui implique son application en raison de l'apparence de qualité qui confère le placement ordonné des pièces et la régularité du profil.

Pour assurer le maintien de l'ensemble de ses propriétés, il est nécessaire de procéder au placement de chaque bloc selon des règles précises, appliquées par une assistance informatique de la pose. Le brevet FR2921954 décrit un exemple de système d'aide à la pose de blocs de construction d'ouvrages artificiels comprend :
- une grue pour déplacer un bloc à poser,
- un dispositif de positionnement disposé pour mesurer des coordonnées de position du bloc dans l'espace
- une unité de traitement de données avec un écran d'affichage reliée au dispositif de positionnement pour afficher une représentation dudit bloc à partir des coordonnées de position
- des capteurs d'orientation spatiale pour mesurer des coordonnées d'orientation du bloc dans l'espace.
L'unité de traitement comprend en outre un moyen pour enregistrer une représentation en 3D du bloc et est agencée pour afficher sur l'écran le bloc à partir desdites coordonnées de position et d'orientation dans l'espace.

Il est néanmoins nécessaire de procéder à une inspection régulière de telles carapaces pour vérifier l'absence de glissements intempestifs de certains blocs, et le maintien d'une géométrie des blocs conformes aux règles de positionnement relatives des blocs. Une grande partie de la carapace étant immergée, un contrôle humain est fastidieux, voire impossible, en raison du nombre considérable de blocs et de combinaison de blocs à vérifier, par un plongeur dont les capacités de déplacement, de vision et de mesure sont limitées.

L'objet de l'invention est d'améliorer les solutions d'inspection de telles carapaces.

### Etat de la technique

On connaît dans l'état de la technique le brevet américain US9019795B2 qui propose une solution pour enregistrer les coordonnées de surface relatives. Ensuite, une partie de l'objet "la face avant" immergée dans un fluide est imagée en dirigeant une impulsion sonar vers l'objet et en enregistrant les signaux sonar réfléchis par l'objet avec un réseau d'imagerie sonar. Ensuite, les coordonnées de surface relatives enregistrées sont ajustées de manière itérative aux coordonnées calculées à partir de l'image du sonar. Par la suite, les coordonnées de la surface de la "face arrière" de l'objet qui n'est pas observable dans l'image du sonar sont connues, et une image générée par ordinateur de la face arrière est cousue sur l'image du sonar de sorte que l'objet peut être vu à partir d'une pluralité de points de vue séparés de la matrice d'imagerie sonar. En particulier, l'objet peut être amené à pivoter sur un écran de visualisation pour donner une vue tridimensionnelle nettement améliorée.

Cette solution permet de reconstruire une image tridimensionnelle manipulable de manière virtuelle, et de procéder à des traitements informatiques d'analyse des positions relatives des blocs. Elle est toutefois très dépendante de la qualité des images Sonar. Si la qualité de l'image est médiocre, la reconstruction des faces non visibles est très imparfaite et les parties dégradées de l'image donnent lieu à des reconstructions aberrantes par ce traitement.

Le brevet US7466628B2 décrit un procédé de construction de représentations mathématiques d'objets à partir de signaux sonars réfléchis consistant à :
a) diriger une impulsion de faisceau sonar unique vers une surface ;
b) recevoir des signaux sonars réfléchis depuis la surface, les signaux sonars réfléchis reçus par une grande pluralité de détecteurs ;
c) générer des données à partir des signaux sonars réfléchis pour former une représentation physique tridimensionnelle de la surface, où la représentation physique tridimensionnelle est une grande pluralité de points dans un espace physique tridimensionnel ; et
d) générer une première représentation mathématique d'une première zone de la surface à partir de la représentation physique tridimensionnelle, dans laquelle la première représentation mathématique est une fonction continue ayant des dérivées continues sur la première zone, et dans laquelle la première représentation mathématique est choisie pour s'adapter au moins quatre de la pluralité de points selon un premier critère.

Cette solution est adaptée à la reconstruction d'une image d'un bloc, mais pas d'une carapace formée d'un grand nombre de blocs imbriqués.

On connaît également différentes publications scientifiques et notamment les articles suivants :
L'article de M. Bueno Esposito et al.: "3D reconstruction of cubic armoured rubble mound breakwaters from incomplete lidar data", International Journal of Remote Sensing, vol. 36, no. 21, 2 novembre 2015 (2015-11-02), pages 5485-5503; ISSN: 0143-1161, DOi: 10.1080/01431161.2015.1093191.

Cet article propose un algorithme de modélisation 3D de CAU qui utilise les données de nuages de points du brise-lames du monticule de gravats, quelle que soit la méthode d'acquisition utilisée (lidar statique, aérien ou mobile).

L'algorithme se compose de trois étapes principales, représentées dans le diagramme suivant :
- Dans la première étape, un descripteur basé sur le vecteur normal d'un voisinage est calculé pour chaque point de l'ensemble de données, y compris sa variance, qui est utilisée comme valeur de confiance pour faciliter la classification.
- Dans la deuxième étape, les points appartenant au même plan sont classés ensemble. Ce processus est similaire à une approche de croissance régionale et choisit les graines à partir de ces points avec une variance vectorielle normale minimale.
- La dernière étape fonctionne sur des plans précédemment segmentés et reconstruit un cube en fonction des informations géométriques extraites de chaque plan.

Cette solution part d'un postulat fondamentalement différent de celui de l'invention, à savoir que tous les objets constitutifs du brise lame sont des éléments cubiques à faces planes. Partant de ce postulat, cette solution consiste de partir d'un point du nuage de points et de propager ensuite un processus de croissance régional pour regrouper les points appartenant au même plan, et à partir de ces plans ainsi reconstruit par exploration des points voisins, à reconstruire un cube.

On comprend aisément les limites de ce procédé : il ne peut pas être appliqué aux parties masquées des cubes, pour lesquelles aucun point n'est disponible.

D'autres articles proposent des solutions similaires :
- Puente et al.: "Terrestrial laser scanning for geometry extraction and change monitoring of rubble mound breakwaters", ISPRS Annals of Photogrammetry, Remote Sending and Spatial Information Sciences, vol. 11-5, 28 mai 2014 (2014-05-28), pages 289-295;
- Safari Iman et al.: "Hydraulic stability and wave overtopping of Starbloc armored mound breakwaters", Ocean Engineering, Pergamon, NL, vol. 151, 13 février 2018 (2018-02-13), pages 268-275;
- Kim D. H. et al.: "Neural network for design and reliability analysis of rubble mound breakwaters", Ocean Engineering, Pergamon, NL, vol. 32, no. 11-12, août 2005 (2005-08), pages 1332-1349;
- Jiaqi Yang et al.: "A Performance Evaluation of Correspondence Grouping Methods for 3D Rigid Data Matching", ARXIV.ORG, Cornell University Library,USA, 5 juillet 2019 (2019-07-05)

### Inconvénients de l'art antérieur

Les solutions de l'art antérieur sont très dépendantes de la qualité du nuage de points acquis, et fournissent des résultats très médiocres lorsque une partie importante des éléments constitutifs de la digue sont masquées, ce qui pourtant est très fréquent, ou lorsque ces éléments ne présente pas une forme simple, cubique par exemple, ni homogène.

### Solution apportée par l'invention

Afin de remédier aux inconvénients de l'art antérieur, la présente invention concerne selon son acception la plus générale un procédé de construction d'une représentation tridimensionnelle virtuelle d'une carapace de digue-présentant les caractéristiques énoncées dans la revendication 1.

Le positionnement des objets candidats consiste notamment à déterminer la position du centre de l'objet virtuel et son orientation.

Les règles d'évaluation de la cohérence géométrique de chaque objet candidat par rapport au nuage de points et/ou aux autres objets candidats sont par exemple :
- un seuil sur la distance relative entre deux plus proches « objets candidats »,
- une condition sur la distribution des distances entre les points du nuage de points situés dans le voisinage de chaque « objet candidat » et la surface dudit objet,

On attribue à chaque objet candidat un indicateur de validité résultant de la conformité à l'ensemble des règles.

Le procédé comporte une étape initiale d'enregistrement d'un nuage de points de la carapace en blocs artificiels sous la forme de données en nuage de points constituées par un ensemble de triplets (xᵢ, yᵢ, zᵢ) de coordonnées des points relevés à la surface de la carapace. Dans le cas d'un levé bathymétrique, chaque point correspond aux coordonnées de l'intersection du faisceau émis par un équipement bathymétrique avec la surface de la carapace.

Le procédé comporte en outre une étape additionnelle de nettoyage du nuage de points « brut » afin d'éliminer les points parasites, puis un lissage et une densification du nuage de points ainsi nettoyé en procédant à un traitement par interpolation, pour disposer d'un fichier numérique amélioré consistant en un nuage de point d'une résolution de l'ordre de 5 centimètres

Avantageusement, le procédé comporte, une fois la représentation virtuelle obtenue, une étape additionnelle de comptage du nombre de zones de contact de chaque bloc virtuel avec les blocs virtuels adjacents et de calcul de densité de pose.

L'invention concerne aussi un procédé d'estimation de l'évolution d'une carapace caractérisé en ce qu'on acquiert pendant une période temporelle une série de nuages de points de ladite carapace, en ce qu'on applique à chacun des nuages de point un traitement susvisé, et en ce que procède à des comparatifs de modèle 3D afin d'identifier les mouvements de la carapace entre deux dates.

### Description détaillée d'un exemple non limitatif de réalisation

La présente invention sera mieux comprise à la lecture de la description d'un exemple non limitatif de réalisation, qui suit, se référant aux dessins annexés où :

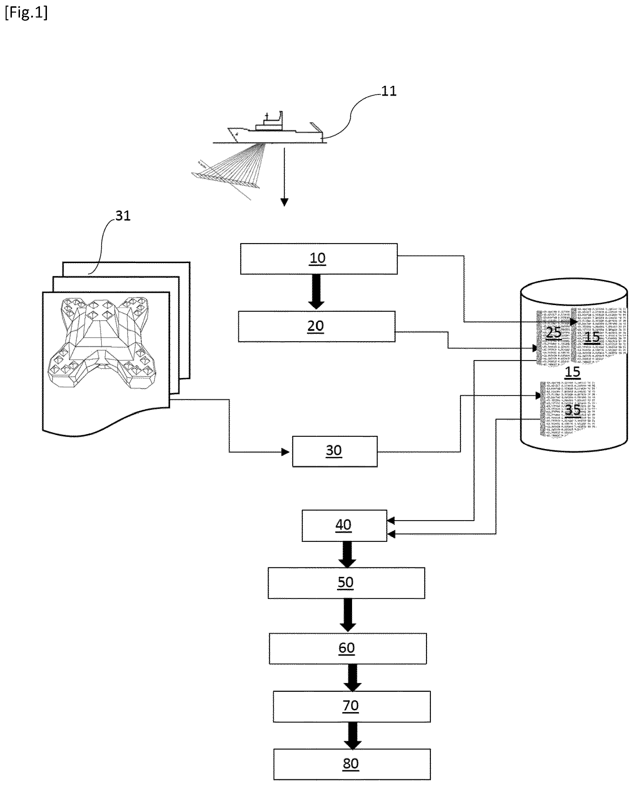

[Fig. 1] La figure 1 représente une vue schématique du logigramme des traitements
[Fig. 2] La figure 2 représente un exemple d'image de la carapace sous la forme de nuage de points
[Fig. 3] La figure 3 représente un exemple d'image en réalité augmentée de la carapace sous la forme de nuage de points
[Fig. 4] La figure 4 représente un exemple d'un nuage de point amélioré de la carapace sous la forme de nuage de points après filtrage.

L'objet de l'invention est de permettre la détermination de manière automatisée de la position de chaque bloc artificiel d'une carapace de digue à partir du nuage de point, puis l'identification des anomalies de pose et d'imbrication des blocs artificiels, et optionnellement l'estimation de l'évolution de la structure de la carapace dans le temps et la prévision des risques d'évolutions dommageables.

### Données d'entrée

Les données d'entrées comprennent :
- Une représentation de la carapace étudiée sous forme de nuage de points
- Une représentation en nuage de point du modèle ou un modèle numérique 3D de bloc utilisés pour la construction de la carapace.

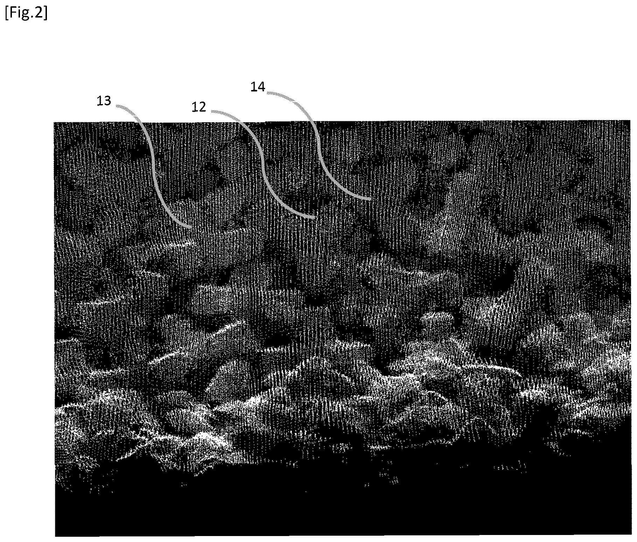

L'image brute de la carapace est illustrée par la figure 2. Elle permet de deviner un enchevêtrement de blocs (12, 13, 14).

La représentation en nuage de points de la carapace provient de mesures réalisées à l'aide d'appareils spécifiques, tels que des sondeurs bathymétriques et alternativement de lidars, c'est-à-dire des faisceaux lasers pour le relevé à faible profondeur, en particulier près du littoral ou encore de sonars multifaisceaux ou encore par photogrammétrie. Hormis pour la photogrammétrie, Le principe de la mesure est le suivant : un signal acoustique est émis par un transducteur (ou plutôt, généralement, un ensemble de transducteurs) à large ouverture angulaire latérale ; le signal réfléchi par le fond est reçu par un réseau de transducteurs perpendiculaire à la coque du navire.

Par combinaison des signaux reçus par les transducteurs du réseau (formation de voies), on peut reconstituer le signal réfléchi par le fond dans des faisceaux angulaires étroits (de l'ordre de 1°, ou moins) : les sondeurs modernes peuvent ainsi former plusieurs dizaines ou plusieurs centaines de voies. À chaque signal émis ("ping") correspondent ainsi plusieurs dizaines ou plusieurs centaines de signaux reçus, chacun représentant le signal réfléchi par un secteur angulaire étroit, et donc une petite zone du fond ; sur chacun de ces signaux on peut mesurer :
- un temps de parcours, et donc, une distance oblique, d'où peut se déduire une profondeur à une position donnée si l'on connaît la géométrie de la mesure (position et attitude du navire)
- une intensité de signal, qui dépend de la géométrie de la mesure et de la réflectivité du fond (donc, de sa nature : roche, vase, etc.). La combinaison des informations reçues, pour des fauchées successives, permet de décrire très finement les profondeurs sur une largeur qui dépend de l'ouverture angulaire du sondeur (de quelques dizaines de mètres par faibles fonds, à plus de 20 km par grands fonds), mais aussi de constituer une image du fond représentative de la nature des fonds marins.

La première étape (10) consiste donc à récupérer et à enregistrer un nuage de points de la digue en blocs artificiels (obtenu par bathymétrie, lidar, photogrammétrie). Ces données peuvent notamment être recueillies par un navire océanographique (11) équipé d'un sonar multifaisceaux, d'un lidar, ou par un porteur aérien (par exemple un drone), équipé d'un capteur photographique ou d'une caméra.

Les données (16) en nuage de points sont constituées par un ensemble de triplets (xᵢ, yᵢ, zᵢ) chaque point correspondant aux coordonnées de l'intersection du faisceau émis avec la surface de la carapace.

La deuxième étape consiste à densifier le nuage de points « brut » en procédant à un traitement par interpolation, pour disposer d'un fichier numérique amélioré (25) d'une résolution de l'ordre de 5 centimètres.

On enregistre (30) également dans la mémoire (15) le modèle numérique 3D d'au moins un bloc de référence (31) (35).

### Détermination de manière automatisée de la position de chaque bloc artificiel à partir du nuage de point, puis identification des anomalies de pose, d'imbrication des blocs artificiels.

On procède ensuite à la construction (50) d'une image tridimensionnelle virtuelle en appliquant à la représentation de la carapace enregistrée sous forme d'un nuage de points (25) un algorithme de reconnaissance d'objet, l'objet à reconnaître étant dans ce cas le modèle numérique (35) du modèle de bloc utilisé pour la constitution de la carapace.

Les modèles de blocs sont généralement de type tétrapodes, pentapodes et/ou hexapodes ou encore de forme présentant trois pieds cubiques solidarisés entre eux par un cube central qui peut être partiellement évidé et assurant la liaison des trois pieds précités De façon générale, le modèle de bloc n'est pas cubique ni sphérique.

Cet algorithme identifie dans le nuage de points (25) l'ensemble des entités assimilables à un bloc (35) et les positionne pour les mettre en concordance avec le nuage de points.

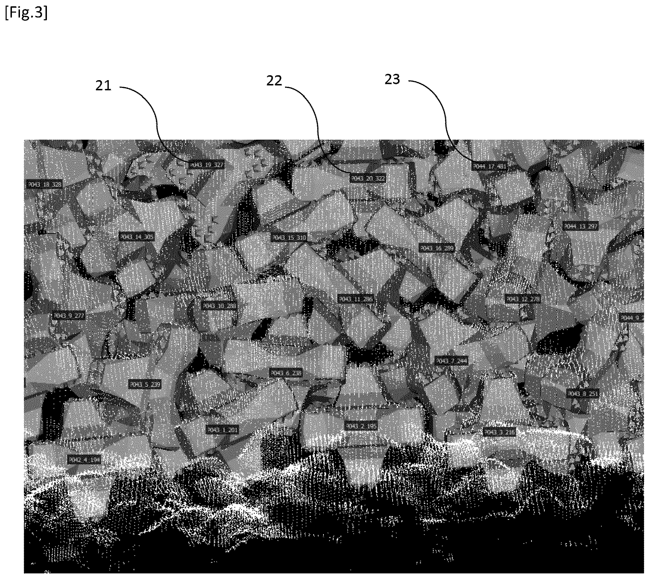

Ce traitement (50) permet de déterminer des blocs virtuels candidats présentant une concordance significative avec les formes reconnues sur le modèle numérique (35). Il aboutit à une collection de données constituée par les coordonnées du barycentre de chacun des blocs virtuels candidats et leur orientation dans un référentiel local ou absolu. Ces blocs virtuels candidats (21 à 24) sont repositionnés sur le nuage de points (15) en réalité augmentée pour fournir une représentation illustrée par la figure 3.

On applique ensuite un traitement de filtrage (70) qui trie les blocs candidats sur la base de leur cohérence géométrique. Le filtrage peut par exemple prendre en compte les distances entre deux plus proches blocs candidats, ou la distribution des distances entre les points du nuage de points situés dans le voisinage de chaque « objet candidat » et la surface dudit objet.

Cette étape permet d'éliminer les fantômes, c'est-à-dire des blocs virtuels reconnus à partir des données atypiques, et qui ne peuvent pas correspondre à des blocs réels en raison de la non-conformité avec des règles impératives. Par exemple, deux objets ne peuvent interpénétrer leurs parties pleines.

Il est ensuite possible d'ajouter manuellement des blocs manquants éventuels par des hypothèses sur les lacunes où existent pourtant des points dans le nuage de points même si ces points sont insuffisants pour réaliser une reconnaissance à l'étape précédente.

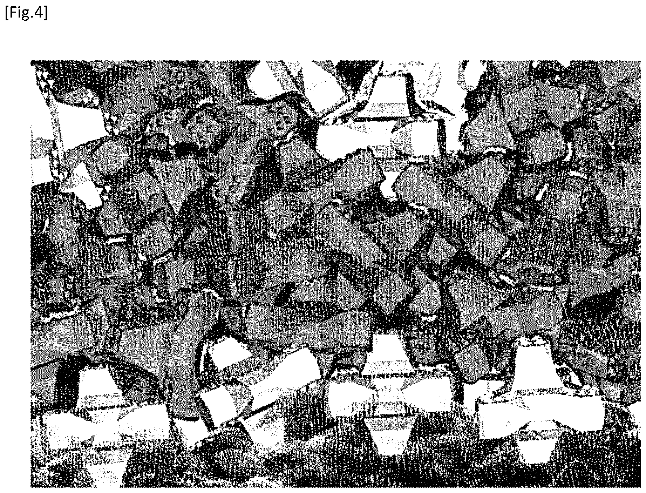

On applique ensuite un nouveau traitement (80) qui réalise un recalage plus fin des blocs artificiels en appliquant par exemple un algorithme pour améliorer le recalage dans le nuage de points pour reconstruire une carapace virtuelle illustrée par la figure 4 constituant un jumeau numérique de la carapace représentée par l'image (25).

Cette étape de recalage peut être basée sur le critère suivant :
- Distribution des distances des points au voisinage du bloc recalé par rapport au modèle Cette représentation graphique est associée à une représentation numérique comprenant les coordonnées retraitées des blocs virtuels filtrés et leur orientation. Cette représentation numérique permet de procéder à un traitement pour calculer par exemple le nombre de points de contact de chaque bloc avec des blocs adjacents, ainsi que les distances entre les zones de proximité de blocs adjacents, afin de fournir une information sur la conformité de la pose des blocs formant la carapace. Un bloc sera par exemple qualifié de non-conforme si moins de trois de ses bras n'entre en contact par exemple avec un bloc adjacent ou avec la digue ou s'il n'est pas conforme à des règles de pose du constructeur.

### Identification de la position d'un capteur vidéo, modélisation par photogrammétrie des accropodes visualisés, détermination de la position des acropodes visualisés et identification/confirmation des anomalies de pose

Les traitements susvisés peuvent être appliquées à une succession d'images brutes (15), géoréférencées ou non, acquises à des moments différents.

On reconstruit pour chacune des images une image en réalité augmentée horodatée pour réaliser une séquence vidéo permettant de visualiser les glissements et évolutions des blocs constitutifs de la carapace. Le modèle photogrammétrique animé de la portion inspectée est réalisée avec un algorithme (MPL2) paramétré selon la vidéo - cet algorithme permet de déduire la position de la caméra à chaque photo extraite par rapport au modèle recrée.

On compare ce modèle photogrammétrique avec le modèle 3D de la digue précédemment obtenu et transformé en nuage de points par le même algorithme que lors de la phase précédente afin de le recaler. On déduit alors la position absolue de la caméra à chaque photo extraite de la vidéo. On reconstitue alors le tracé de la caméra dans le modèle 3D précédemment créé et on identifie les blocs vus à la vidéo dans la vidéo d'inspection par une couche superposée de texte.

### Suivi temporel

### L'invention concerne aussi un procédé de suivi de l'évolution d'une carapace.

A cet effet, on enregistre une succession de nuages de point de la même carapace acquises pendant une plage de temps de plusieurs mois. On applique à chacun des nuages de point les traitements susvisés. On utilise les données des représentations en réalité augmentée ainsi que les données de positionnement des blocs virtuels (coordonnées du barycentre, orientation) pour superposer et comparer des modèles.

### Détermination de la position d'une vidéo par rapport à un environnement connu

La représentation tridimensionnelle virtuelle produite selon le procédé objet de l'invention permet par ailleurs de calculer la position de la vidéo par rapport à l'environnement.

## Revendications

1. Procédé de construction d'une représentation tridimensionnelle virtuelle d'une carapace de digue constituée d'une imbrication d'une pluralité d'éléments solides (12, 13, 14) appartenant à au moins une classe d'objets de géométrie prédéterminée, consistant à exploiter un nuage de points tridimensionnels (25) de la carapace réelle, comportant :
- Une première étape consistant à récupérer et à enregistrer un nuage de points constitué par un ensemble de triplets (xᵢ, yᵢ, zᵢ) et une deuxième étape consistant à densifier le nuage de points « brut » en procédant à un traitement par interpolation, pour disposer d'un fichier numérique amélioré (25) d'une résolution de l'ordre de 5 centimètres
- Une étape de reconnaissance de forme (50) appliquée audit nuage de points (25) pour identifier des « objets candidats » et les positionner par rapport au nuage de points (25), l'objet à reconnaître étant **caractérisé par** un modèle numérique (35) du modèle de bloc utilisé pour la constitution de la carapace, ledit modèle de bloc n'étant pas cubique sphérique,
- ladite étape de reconnaissance de forme (50) consistant à déterminer des objets candidats présentant une concordance significative avec la représentation numérique de l'ouvrage sous forme de nuage de points (25), délivrant une collection de données constituée par les coordonnées du barycentre de chacun des objets candidats et leur orientation dans un référentiel local ou absolu
- Une étape de filtrage (70) desdits « objets candidats » par rapport à au moins une règle, l'ensemble de règles comportant des critères évaluant la cohérence géométrique de chaque objet candidat par rapport au nuage de points et/ou aux autres objets candidats, puis d' attribution à chaque objet candidat d'un indicateur résultant de la conformité avec ladite au moins une règle,
- Ladite étape de filtrage (70) prenant en compte les distances entre deux plus proches objets candidats, ou la distribution des distances entre les points du nuage de points situés dans le voisinage de chaque « objet candidat » et la surface dudit objet, et consistant à éliminer des objets candidats reconnus à partir des données atypiques, et qui ne peuvent pas correspondre à des blocs réels en raison de la non-conformité avec ladite au moins une règle,
- Une étape de recalage (80) de chaque objet candidat valide virtuel par une minimisation des distances entre sa surface et les points du nuage de points situés dans le voisinage dudit objet.

2. Procédé de construction d'une représentation tridimensionnelle virtuelle d'une carapace selon la revendication 1 **caractérisé en ce que** chaque point dudit ensemble de triplets (xᵢ, yᵢ, zᵢ) correspond aux coordonnées de l'intersection d'un faisceau émis par un équipement bathymétrique avec la surface de ladite carapace.

3. Procédé de construction d'une représentation tridimensionnelle virtuelle d'une carapace selon la revendication 1 **caractérisé en ce qu'**il comporte une étape (30) d'enregistrement d'au moins un modèle 3D CAD du bloc de référence (31).

4. Procédé de construction d'une représentation tridimensionnelle virtuelle d'une carapace selon la revendication 1 **caractérisé en ce qu'**il comporte une étape de construction (50) d'une image tridimensionnelle virtuelle en appliquant à l'image de la carapace enregistrée sous forme d'un nuage de points (25) un algorithme de mise en concordance du modèle numérique (35) du modèle de bloc utilisé pour la constitution de la carapace par reconnaissance de forme.

5. Procédé de construction d'une représentation tridimensionnelle virtuelle d'une carapace selon la revendication 1 **caractérisé en ce qu'**il comporte une étape additionnelle d'identification du nombre de contacts de chaque bloc virtuel avec les blocs virtuels adjacents.

6. Procédé de suivi de l'évolution d'une carapace **caractérisé en ce qu'**on acquiert pendant une période temporelle une série de nuages de points de ladite carapace, **en ce qu'**on applique à chacun des nuages de point un traitement conforme à la revendication 1 pour déterminer la position horodatée de chaque bloc artificiel de la dite carapace représentée par des objets virtuels, et **en ce que** l'on compare plusieurs représentations correspondant à des dates différentes dans le but de réaliser un suivi de l'évolution de la carapace dans le temps.

## Patentansprüche

1. Verfahren zum Herstellen einer virtuellen dreidimensionalen Abbildung einer Dammaußenschicht, die aus einer Verschachtelung einer Vielzahl von festen Elementen (12, 13, 14) aufgebaut ist, die zu mindestens einer Klasse von Objekten mit vorbestimmter Geometrie gehören, das darin besteht, eine Wolke (25) aus dreidimensionalen Punkten der tatsächlichen Außenschicht auszuwerten, das aufweist:
- einen ersten Schritt, der darin besteht, eine Punktwolke abzurufen und zu speichern, die aus einem Satz von Tripletts (xᵢ, yᵢ, zᵢ) aufgebaut ist, und einen zweiten Schritt, der darin besteht, eine "rohe" Punktwolke zu verdichten, indem eine Interpolationsverarbeitung vorgenommen wird, um über eine verbesserte digitale Datei (25) mit einer Auflösung in der Größenordnung von 5 Zentimetern zu verfügen
- einen Formerkennungsschritt (50), der zum Identifizieren von "Kandidatenobjekten" und Positionieren davon in Bezug auf die Punktwolke (25) auf die Punktwolke (25) angewendet wird, wobei das zu erkennende Objekt durch ein digitales Modell (35) des Blockmodells **gekennzeichnet ist,** das für den Aufbau der Außenschicht verwendet wird, wobei das Blockmodell weder kubisch noch sphärisch ist,
- wobei der Formerkennungsschritt (50) darin besteht, die Kandidatenobjekte zu bestimmen, die eine signifikante Übereinstimmung mit der digitalen Abbildung des Bauwerks in Form einer Punktwolke (25) aufweisen, wobei eine Datensammlung geliefert wird, die aus den Koordinaten des Schwerpunkts jedes der Kandidatenobjekte und ihrer Ausrichtung in einem lokalen oder absoluten Bezugssystem aufgebaut ist
- einen Schritt (70) eines Filterns der "Kandidatenobjekte" in Bezug auf mindestens eine Regel, wobei der Satz von Regeln Kriterien aufweist, die die geometrische Kohärenz jedes Kandidatenobjekts in Bezug auf die Punktwolke und/oder auf die anderen Kandidatenobjekte bewerten, dann eines Zuweisens eines Indikators, der aus der Konformität mit der mindestens einen Regel resultiert, zu jedem Kandidatenobjekt,
- wobei der Filterschritt (70) die Abstände zwischen zwei nächsten Kandidatenobjekten oder die Verteilung der Abstände zwischen den Punkten der Punktwolke, die sich in der Nähe jedes "Kandidatenobjekts" befinden, und der Oberfläche des Objekts berücksichtigt, und darin besteht, Kandidatenobjekte zu entfernen, die aus den atypischen Daten erkannt werden und die aufgrund der Nichtkonformität mit der mindestens einen Regel nicht tatsächlichen Blöcken entsprechen können,
- einen Änderungsschritt (80) jedes virtuellen gültigen Kandidatenobjekts durch eine Minimierung der Abstände zwischen seiner Oberfläche und den Punkten der Punktwolke, die sich in der Nähe des Objekts befinden.

2. Verfahren zum Herstellen einer virtuellen dreidimensionalen Abbildung einer Außenschicht nach Anspruch 1, **dadurch gekennzeichnet, dass** jeder Punkt des Satzes von Tripletts (xᵢ, yᵢ, zᵢ) den Koordinaten des Schnittpunkts eines Strahls, der durch eine bathymetrische Ausrüstung emittiert wird, mit der Oberfläche der Außenschicht entspricht.

3. Verfahren zum Herstellen einer virtuellen dreidimensionalen Abbildung einer Außenschicht nach Anspruch 1, **dadurch gekennzeichnet, dass** es einen Schritt (30) des Speicherns mindestens eines CAD-3D-Modells des Referenzblocks (31) aufweist.

4. Verfahren zum Herstellen einer virtuellen dreidimensionalen Abbildung einer Außenschicht nach Anspruch 1, **dadurch gekennzeichnet, dass** es einen Schritt (50) des Herstellens eines virtuellen dreidimensionalen Bildes aufweist, indem auf das Bild der Außenschicht, das in Form einer Punktwolke (25) gespeichert ist, ein Algorithmus zum Bringen in Übereinstimmung des digitalen Modells (35) des Blockmodells, das für den Aufbau der Außenschicht verwendet wird, durch Formerkennung angewendet wird.

5. Verfahren zum Herstellen einer virtuellen dreidimensionalen Abbildung einer Außenschicht nach Anspruch 1, **dadurch gekennzeichnet, dass** es einen zusätzlichen Schritt eines Identifizierens der Anzahl von Kontakten jedes virtuellen Blocks mit angrenzenden virtuellen Blöcken aufweist.

6. Verfahren zum Verfolgen der Entwicklung einer Außenschicht, **dadurch gekennzeichnet, dass** während einer Zeitperiode eine Reihe von Punktwolken der Außenschicht erfasst wird, dass auf jede der Punktwolken eine Verarbeitung nach Anspruch 1 zum Bestimmen der mit einem Zeitstempel versehenen Position jedes künstlichen Blocks der Außenschicht anwendet wird, die durch virtuelle Objekte abgebildet wird, und dass mehrere Abbildungen verglichen werden, die verschiedenen Daten entsprechen, mit dem Ziel, eine Verfolgung der zeitlichen Entwicklung der Außenschicht auszuführen.

## Claims

1. Method for generating a virtual three-dimensional representation of a breakwater shield consisting of an interweaving of a plurality of solid elements (12, 13, 14) belonging to at least one class of objects having a predetermined geometry, the method consisting in exploiting a three-dimensional point cloud (25) of the real shield, comprising:
- a first step consisting in retrieving and recording a point cloud consisting of a set of triplets (xᵢ, yᵢ, zᵢ) and a second step consisting in densifying the "raw" point cloud by performing interpolation processing in order to make an improved digital file (25) having a resolution of approximately 5 centimeters
- a step (50) of shape recognition which is applied to the point cloud (25) in order to identify "candidate objects" and to position them relative to the point cloud (25), the object to be recognized being **characterized by** a digital model (35) of the block model used for the constitution of the shield, the block model not being cubic or spherical,
- the shape recognition step (50) consisting in determining candidate objects having a significant match with the digital representation of the structure in the form of a point cloud (25), and delivering a collection of data consisting of the coordinates of the barycenter of each of the candidate objects and their orientation in a local or absolute reference frame
- a step (70) of filtering the "candidate objects" in relation to at least one rule, the set of rules comprising criteria evaluating the geometric consistency of each candidate object with respect to the point cloud and/or to the other candidate objects, then assigning an indicator resulting from the conformity with the at least one rule to each candidate object,
- said filtering step (70) taking into account the distances between two closest candidate objects or the distribution of distances between the points of the point cloud located in the vicinity of each "candidate object" and the surface of said object, and consisting in eliminating candidate objects which are recognized from atypical data and which cannot correspond to real blocks due to the nonconformity with the at least one rule,
- a step (80) of resetting each valid virtual candidate object by minimizing the distances between its surface and the points of the point cloud located in the vicinity of said object.

2. Method for generating a virtual three-dimensional representation of a shield according to claim 1, **characterized in that** each point of the set of triplets (xᵢ, yᵢ, zᵢ) corresponds to coordinates of the intersection of a beam emitted by bathymetric equipment with the surface of the shield.

3. Method for generating a virtual three-dimensional representation of a shield according to claim 1, **characterized in that** it comprises a step (30) of recording at least one 3D CAD model of the reference block (31).

4. Method for generating a virtual three-dimensional representation of a shield according to claim 1, **characterized in that** it comprises a step (50) of generating a virtual three-dimensional image by applying an algorithm for matching the digital model (35) of the block model used to make up the shield by shape recognition to the image of the shield recorded in the form of a point cloud (25).

5. Method for generating a virtual three-dimensional representation of a shield according to claim 1, **characterized in that** it comprises an additional step of identifying the number of contacts of each virtual block with the adjacent virtual blocks.

6. Method for monitoring the evolution of a shield, **characterized in that** a series of point clouds of the shield is acquired during a time period, **in that** processing according to claim 1 is applied to each of the point clouds in order to determine the timestamped position of each artificial block of the shield represented by virtual objects, and **in that** a plurality of representations corresponding to different dates are compared with the aim of monitoring the evolution of the shield over time.
